Europäisches Patentamt

(19) European Patent Office

Office européen des brevets

(11) **EP 0 859 425 A1**

(12) **EUROPEAN PATENT APPLICATION**
published in accordance with Art. 158(3) EPC

(43) Date of publication:
19.08.1998 Bulletin 1998/34

(51) Int. Cl.$^6$: **H01Q 1/42**

(21) Application number: 97924365.6

(86) International application number:
PCT/JP97/01979

(22) Date of filing: 10.06.1997

(87) International publication number:
WO 98/10484 (12.03.1998 Gazette 1998/10)

(84) Designated Contracting States:
DE FR GB

(30) Priority: 03.09.1996 JP 233416/96

(71) Applicant:
HINO JIDOSHA KOGYO KABUSHIKI KAISHA
Hino-shi Tokyo 191 (JP)

(72) Inventors:
• ISHIZAKA, Hiroyuki,Hino Jidosha Kogyo
Kabushiki K.
Tokyo 191  1 (JP)
• HASHIMOTO, Osamu
Kanagawa 229 (JP)

(74) Representative:
Skone James, Robert Edmund
GILL JENNINGS & EVERY
Broadgate House
7 Eldon Street
London EC2M 7LH (GB)

(54) **ON-VEHICLE RADAR ANTENNA**

(57) Conventional plastic processing technology can be used to manufacture a radome through which electromagnetic waves for radar with high frequencies of several tens of gigahertz can pass with good transmission efficiency, and which amply protects transmitting and receiving antenna elements from wind and rain. The angle of incidence of electromagnetic waves at the surface of the radome is set to be approximately equal to the Brewster angle, said radome being formed from a dielectric material, facing the direction of vehicle travel, and covering the antenna elements which transmit and receive electromagnetic waves. The thickness of the radome where the electromagnetic waves pass through it is set to $0.5 \times n\lambda g$ (where n is a natural number and $\lambda g$ is the guide wavelength of the electromagnetic waves in the dielectric material). A device capable of allowing electromagnetic waves at frequencies of 50 to 100 GHz to pass through it to an ample extent for practical purposes can be formed, and is both small and lightweight. These frequencies are those expected to be allocated to vehicle-mounted radar devices.

FIG.1

EP 0 859 425 A1

## Description

### Technical Field

This invention can be utilized in vehicle radar devices. It utilizes electromagnetic waves at frequencies of several tens of gigahertz, and it is suited to use in radar devices for measuring information relating to the distance to an obstacle located in front of a vehicle.

### Background Art

An automobile radar device transmits electromagnetic waves forward in the direction of travel (and also at angles to this direction), receives reflected waves from an obstacle, and measures information relating to the distance to the obstacle, using the elapsed time from transmission to reception. Such a device can be used for example to make regular measurements of the distance to a vehicle travelling in front, and to automatically provide a warning when this inter-vehicle distance becomes too small, thereby alerting the driver to this situation. In addition, research is being carried out on intelligent cruise control systems where, if the distance to a vehicle travelling in front becomes too short, a safe inter-vehicle distance for the present driving speed is automatically maintained. Such systems will come into practical use in the future.

It is anticipated that in Japan a frequency of approximately 60 GHz (wavelength of 5 mm) will be allocated for the radar devices used in such systems, and in Europe and America a frequency of approximately 77 GHz (wavelength of 4 mm) will be allocated. The radiant element of the antenna device will therefore have a length of 2 to 3 mm. As regards the size of the antenna device itself, the diagonal length of the face perpendicular to the direction of propagation of the electromagnetic waves will be several millimeters, irrespective of whether the antenna device has a horn or a plate configuration. Even if gain is increased by using a plurality of such antenna devices in parallel, or even if a large reflector is used, the diagonal length (or diameter) will be no more than several centimeters.

In a vehicle-mounted radar device, a small antenna element of this sort has to be mounted facing the direction in which the vehicle travels, and it is essential for the antenna element to be protected from wind, rain and snow, and from particulates in the air. It is therefore covered by a radome made of a dielectric material through which electromagnetic waves can pass.

In this specification, "antenna element" is defined as a physical structure formed from metal, dielectric or semiconductor, and serving to transmit or receive electromagnetic waves. "Antenna element" in this sense includes radiant elements and reflecting elements.

Radomes covering antenna elements have been disclosed in Japanese Patent Application Laid open Nos. 58-17104, 4-105705 and 4-288704. These radomes are designed to improve the electromagnetic wave transmission characteristics and also to give protection, so that wind, rain and the like do not directly impinge on the antenna elements and thereby affect their electromagnetic wave characteristics.

However, these examples of prior art were designed for electromagnetic wave frequencies of several hundred megahertz or less, and do not utilize the frequencies of several tens of gigahertz mentioned above. Actual experiments using frequencies of several tens of gigahertz revealed the necessity of taking high-frequency characteristics into account when designing a radome, and such high-frequency characteristics were not given due consideration in the aforementioned prior art. For example, taking the thickness of a dielectric radome according to this prior art as being around 3 mm, then the fact that such radomes were designed to be thinner when shorter wavelengths are employed means that they would end up being from a tenth to a hundredth of a millimeter thick. In other words, a radome according to the prior art would have little mechanical strength and would therefore be impractical.

The present inventors have measured various characteristics of dielectric materials at the frequencies to be allocated to vehicle-mounted radar devices. They have also investigated dielectric materials and structures thereof which are capable of transmitting electromagnetic waves to a sufficient extent for practical purposes at a thickness which provides suitable mechanical strength for a radome.

In the prior art, the structure covering the antenna and thereby lying across the path of the electromagnetic waves was taken to be the radome. However, in this frequency band the antenna element, the transmitting circuit feeding an electromagnetic wave to this antenna element, and the receiving circuit to which the electromagnetic wave from this antenna element is input, are extremely small. Consequently, a feasible alternative construction would be to mount the antenna element and/or the transmitting and receiving circuits inside the box made of dielectric material (e.g., plastic) which constitutes the antenna radome.

With such a background, it is an object of the present invention to provide a vehicle-mounted radar antenna device capable of passing high-frequency electromagnetic waves for radar with frequencies of several tens of gigahertz (wavelengths of several millimeters), and also capable of amply protecting an antenna element from wind and rain; and which can be manufactured by conventional plastic processing techniques. It is a further object of this invention to provide a practical antenna device with a small size construction suitable for mounting on a vehicle.

**Disclosure of the Invention**

The present invention provides an antenna device wherein the angle of incidence of electromagnetic waves at the surface of the radome covering the antenna element, and the thickness of the radome where the electromagnetic waves pass through it, are specified, thereby enabling the technically optimum electromagnetic wave transmission characteristics to be obtained given the properties of the material comprising the radome.

Namely, according to a first aspect, the present invention is a vehicle-mounted radar antenna fitted to a vehicle and comprising, facing the direction of vehicle travel, an antenna element for transmitting and/or receiving electromagnetic waves, and a radome formed from a dielectric material and covering this antenna element; wherein the angle of incidence ($\theta$) of electromagnetic waves at the surface of the aforesaid radome is preferably set to within $\pm5°$ of the Brewster angle, and more preferably to within $\pm2°$ of the Brewster angle, so that said angle of incidence approximates to the Brewster angle. In this specification, the frequencies of interest as regards transmitted and/or received electromagnetic waves are 50 to 100 GHz (wavelengths of 6 mm to 3 mm). The transmission characteristics of electromagnetic waves with these frequencies rapidly improve as the Brewster angle is approached.

When electromagnetic waves are incident on the surface of a radome covering an antenna element, the transmission characteristics of the radome improve as its reflectivity approaches zero. Maximum transmission efficiency can be obtained for an incident electromagnetic wave if its angle of incidence is set to the Brewster angle, at which reflectivity is close to zero. This Brewster angle differs according to the nature of the dielectric material. For example, if an acrylic resin is used, the Brewster angle will be 58°. A practical plastic molded radome can be obtained if the Brewster angle of the particular dielectric material which it is intended to use is found in advance by separate measurements and the antenna element is set up to give this angle. It is difficult to ensure that the angle of incidence is exactly the Brewster angle and therefore in an actual device the angle of incidence is preferably set to within $\pm5°$ of the Brewster angle and more preferably to within $\pm2°$ of the Brewster angle.

As mentioned above, the frequency of the electromagnetic waves used for vehicle-mounted radar devices is expected to be approximately 60 GHz in Japan and approximately 77 GHz in Europe and America. Consequently, if it is known in advance that electromagnetic waves for radar will be in the range 50 to 100 GHz, it will be possible to cope to a greater or lesser extent with the frequency allocated in any country.

According to a second aspect, the present invention is a vehicle-mounted radar antenna fitted to a vehicle and comprising, facing the direction of vehicle travel, an antenna element for transmitting and/or receiving electromagnetic waves, and a radome formed from a dielectric material and covering this antenna element; wherein the thickness of the aforesaid radome where the electromagnetic waves pass through it is set to:

$$0.5 \times n\lambda g$$

where n is a natural number and $\lambda g$ is the guide wavelength of the electromagnetic waves in the aforesaid dielectric material. The frequency of the transmitted and/or received electromagnetic wave is taken to be 50 to 100 GHz (wavelength of 6 mm to 3 mm).

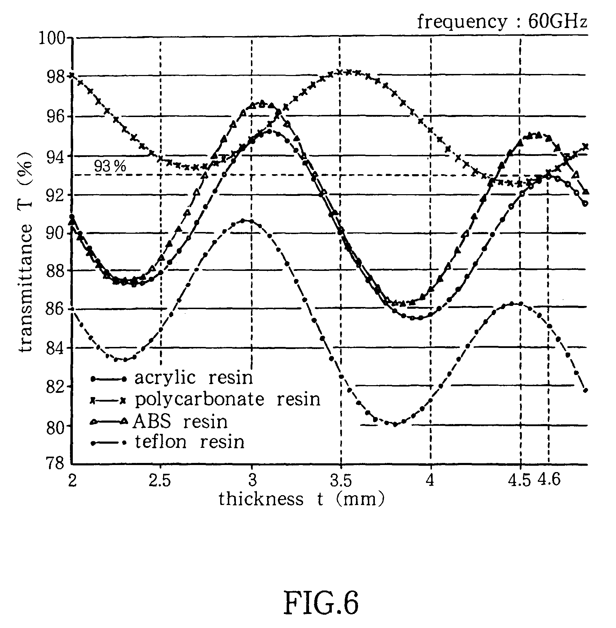

This second aspect of the invention will now be described in greater detail. A careful study of the transmittance of electromagnetic waves passing through a radome covering an antenna element showed that, taking radome thickness along the horizontal axis and transmittance along the vertical axis, the transmittance characteristic has a general tendency to decrease with increasing thickness, but that it also displays, superimposed on this general trend, a variation with an approximately constant period. An example of the results of measurements of this characteristic is given in FIG. 6. This behavior will be easier to understand if we consider the case where the wavelength of the transmitted electromagnetic wave is comparable with the thickness of the radome, and then analyze the relation between thickness and transmittance as being the result of two factors.

The first factor is energy loss of the transmitted electromagnetic wave in the dielectric material comprising the radome, said energy loss being due to the effect of the imaginary component of the transmittance of that dielectric material. For a specific dielectric material, the energy lost by a transmitted electromagnetic wave is directly proportional to the distance through which the electromagnetic wave passes. In other words, this first factor is the factor which results in the transmittance characteristic having the general tendency to decrease with increasing radome thickness.

The second factor arises from the fact that, because the permittivity of the dielectric material comprising the radome is greater than the permittivity of air, repeated reflections of the electromagnetic wave will occur at the two surfaces of a planar radome. The plurality of reflections occurring at these two surfaces result in electromagnetic waves with identical directions of propagation, which means that interference will occur in accordance with their mutual phase relationships. As a result, considered as a function of radome thickness, the transmittance of an electromagnetic wave will have a sine wave characteristic. Because the wavelength of an electromagnetic wave within a dielectric material (this will be termed the "guide wavelength") shortens in accordance with the properties of the material, its transmittance characteristic will vary by a half integer multiple of the guide wavelength.

A characteristic of the sort exemplified in FIG. 6 is the resultant of the superposition of these two factors. It follows that for the industrial design of radome thickness, the thickness which should be selected is the minimum thickness capable of providing sufficient mechanical strength, and such that the variation in transmittance due to interference arising from the second factor described above is at a maximum point in its cycle.

This transmittance characteristic is found in advance by separate measurements of various dielectric materials, and the thickness of a radome of a given material is set with reference to the characteristic curve which shows the variation in transmittance as a function of radome thickness, after taking mechanical strength into account. This procedure provides a radome which allows ample transmission of electromagnetic waves for practical purposes, and which has a thickness which gives suitable mechanical strength.

Although these transmittance-related measurements are best made at the frequency to be used, this is not absolutely necessary. The transmittance characteristics can be grasped by measuring at a somewhat lower frequency, for example at a frequency of several gigahertz or in other words at a frequency which is easier to work with in practical terms, and then extrapolating the results to the design frequency of 50 GHz or more.

According to a third aspect, the present invention is a vehicle-mounted radar antenna fitted to a vehicle and comprising, facing the direction of vehicle travel, an antenna element for transmitting and/or receiving electromagnetic waves, and a radome formed from a dielectric material and covering this antenna element; wherein the aforesaid radome is a box structure formed from a dielectric material, and the whole of the aforesaid antenna element is mounted within this box structure, and a fixture is provided on this box structure for fitting it to a vehicle body. Since the frequency of the transmitted and/or received electromagnetic wave will be 50 to 100 GHz (wavelength of 6 mm to 3 mm), it will also be possible to mount within the aforesaid box structure, in addition to the aforesaid entire antenna element, at least part of the transmitting circuit and/or the receiving circuit.

As mentioned above, because the frequencies to be allocated to vehicle-mounted radar devices will be in the range 50 to 100 GHz, the length of the radiant element will be several millimeters at most, and consequently a horn can be formed with diagonals of the order of several centimeters in length. Accordingly, by making a radome molded from a dielectric material into a box structure provided with a fixture for fitting it to a vehicle body, the antenna element can be mounted within this box structure. If the transmitting and receiving circuits are also mounted within this box structure, the entire device can be housed in a single box, thereby facilitating miniaturization and inexpensive manufacture.

**Brief Description of the Drawings**

FIG. 1 is a block diagram showing the constitution of the main parts of a vehicle-mounted radar antenna according to a first embodiment of this invention.

FIG. 2 is a perspective view showing the external appearance of a vehicle-mounted radar antenna according to a first embodiment of this invention.

FIG. 3 is a perspective view showing a vehicle-mounted radar antenna according to a first embodiment of this invention fitted to a vehicle.

FIG. 4 shows the constitution of the main parts of a reflection coefficient measuring device used to set the angle of incidence in a first embodiment of this invention.

FIG. 5 shows the relation between angle of elevation $\theta n$ and reflection coefficient R as obtained by measurements in a first embodiment of this invention.

FIG. 6 shows the relation between thickness t of dielectric material and transmittance T in a first embodiment of this invention.

FIG. 7 is a perspective view showing the external appearance of a vehicle-mounted radar antenna according to a second embodiment of this invention.

**Best Mode for Carrying Out the Invention**

Embodiments of the present invention will now be described with reference to the drawings.

First Embodiment

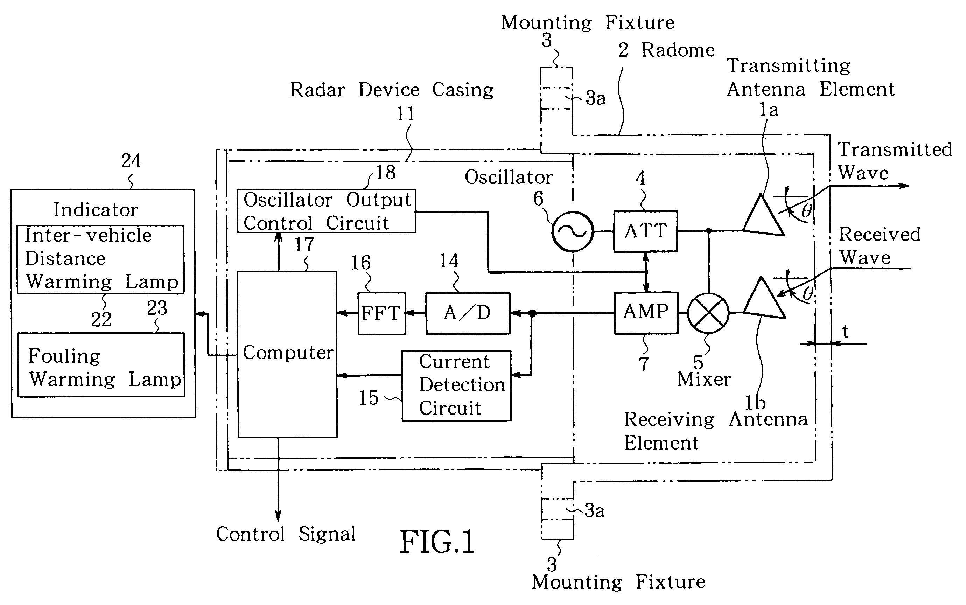

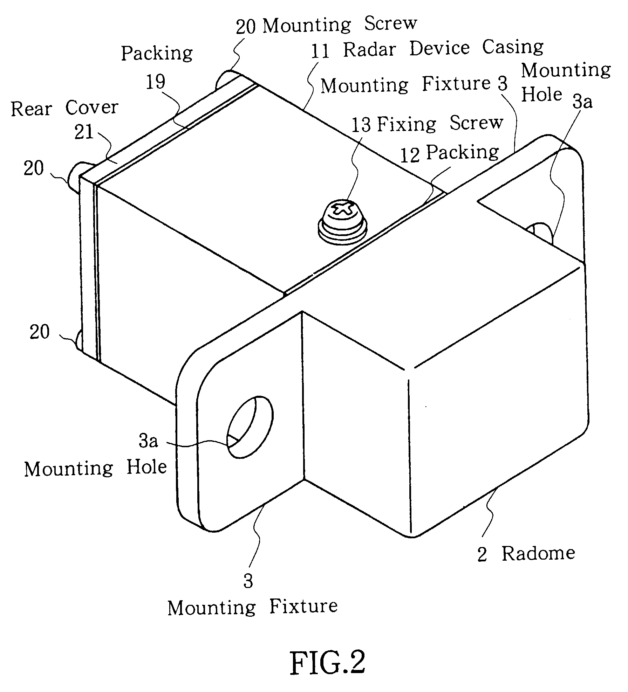

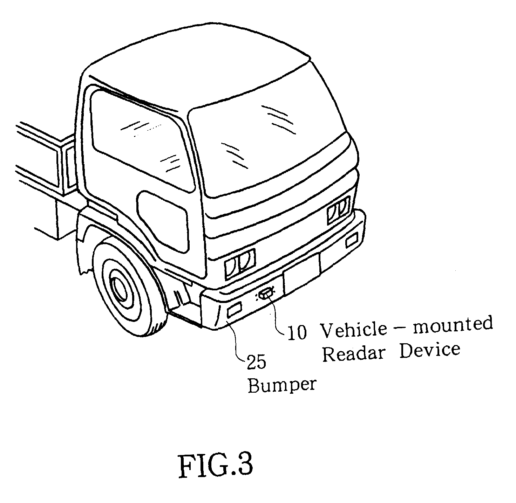

FIG. 1 is a block diagram showing the constitution of the main parts of a vehicle-mounted radar antenna according to a first embodiment of this invention. FIG. 2 is a perspective view showing the external appearance of this vehicle-mounted radar antenna, and FIG. 3 is a perspective view showing this vehicle-mounted radar antenna fitted to a vehicle.

A vehicle-mounted radar antenna according to the first embodiment of this invention is fitted to a vehicle and comprises, facing the direction of vehicle travel, transmitting antenna element 1a for transmitting electromagnetic waves, receiving antenna element 1b for receiving reflected waves from obstacles, and radome 2 formed from a dielectric material and covering transmitting antenna element 1a and receiving antenna element 1b.

The angle of incidence θ of the transmitted wave and the received wave at the surface of radome 2 is set approximately equal to the Brewster angle, and the thickness t of radome 2 where the electromagnetic waves pass through it is set to:

$$0.5 \times n\lambda g$$

where n is a natural number and λg is the guide wavelength of the electromagnetic wave in the dielectric material. Radome 2 is a box structure formed from a dielectric material. Transmitting antenna element 1a and receiving antenna element 1b are mounted within this box structure, which is provided with fixtures 3 having mounting holes 3a for fitting it to a vehicle body.

Attenuator 4 and mixer 5 are connected to transmitting antenna element 1a, and oscillator 6 is connected to attenuator 4. Mixer 5 is also connected to receiving antenna element 1b, and amplifier 7 is connected to this mixer 5.

Radar device casing 11 is mechanically joined to radome 2 by way of packing 12 and by means of fixing screw 13. Housed within radar device casing 11 is the radar device proper, comprising: A/D converter 14 to which is input the output from amplifier 7, and which performs analogue-to-digital conversion; current detection circuit 15 for detecting the value of the electric current; fast Fourier transform circuit 16 which receives the output of A/D converter 14 and performs a fast Fourier transform on it; computer unit 17 to which is input the outputs of fast Fourier transform circuit 16 and current detection circuit 15, and which calculates the inter-vehicle distance; and oscillator output control circuit 18 which sends a control signal to attenuator 4 and amplifier 7 under control of computer unit 17.

Rear cover 21 is fixed to the rear opening of radar device casing 11 by way of packing 19 and by means of mounting screws 20, whereby the inside of the casing is sealed.

Indicator 24 is disposed at the driver's seat, said indicator comprising inter-vehicle distance warning lamp 22 and fouling warning lamp 23. Indicator 24 lights in response to a warning output from computer unit 17, thereby giving a warning.

As shown in FIG. 3, vehicle-mounted radar device 10 according to a first embodiment of this invention, and constituted as described above, is fixed to bumper 25 using mounting fixtures 3, so as to face the direction of vehicle travel.

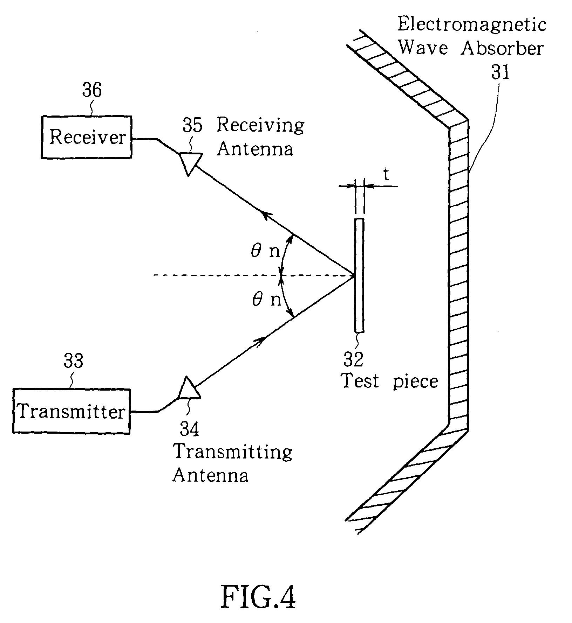

The angle of incidence θ of electromagnetic waves at the surface of the radome is set for the dielectric material to be used after the Brewster angle of this dielectric material has been measured in advance. An explanation will now be given of the measurements performed in order to be able to set the angle of incidence θ of the electromagnetic waves. It is a condition of the present invention that the frequencies to be allocated to vehicle-mounted radar devices will be in the range 50 to 100 GHz (wavelengths of 6 mm to 3 mm), but the explanation given in this instance relates to measurements using electromagnetic waves of 60 GHz, which is the frequency expected to be allocated in Japan. FIG. 4 shows the constitution of the main parts of a reflection coefficient measuring device for setting the angle of incidence. The measurements were performed as follows. Namely, acrylic resin test piece 32 serving as the dielectric material was disposed in front of electromagnetic wave absorber 31, electromagnetic waves of 60 GHz generated by transmitter 33 were emitted from transmitting antenna 34 at various angles of elevation θn to this test piece 32, and for each of these angles of elevation θn receiver 36 received the reflected wave via receiving antenna 35. Samples of dielectric material with thickness t of 1.11 mm, 3.03 mm and 5.03 mm were used as test piece 32.

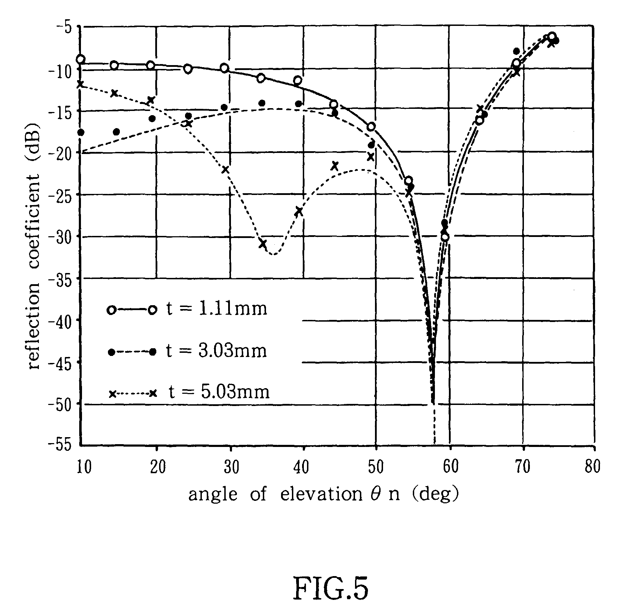

The relation between angle of elevation θn and reflection coefficient R as obtained by measurements is shown in FIG. 5. This shows that whatever the thickness t of the test piece, the reflection coefficient R exhibited a minimum value when the angle of elevation θn was approximately 58°. A minimum value of the reflection coefficient R means that when electromagnetic waves are transmitted at that angle (θn = 58°), the proportion of electromagnetic radiation passing through test piece 32 is greatest. It follows that transmission efficiency can be maximized by setting the angle of incidence θ of the electromagnetic waves shown in FIG. 1 to approximately the Brewster angle characteristic to the material.

The reflection coefficient R can be obtained by means of the following formula.

$$R = \frac{1 - \exp(-j^2 \delta)}{1 - R_p'^2 \exp(-j^2 \delta}$$

$$\delta = \frac{2\pi t}{\lambda} \sqrt{\varepsilon_r - \sin^2 \theta}$$

$$R'_p = \frac{\varepsilon_r\sqrt{1\text{-}\sin^2\theta}\text{-}\sqrt{\varepsilon_r\text{-}\sin^2\theta}}{\varepsilon_r\sqrt{1\text{-}\sin^2\theta}\text{+}\sqrt{\varepsilon_r\text{-}\sin^2\theta}}$$

where

t :     thickness of dielectric material
$\theta$ :     angle of incidence of electromagnetic waves
$\lambda$ :     wavelength of electromagnetic waves
$\varepsilon_r$     : relative permittivity.

Relative permittivity $\varepsilon_r$, thickness t and angle of elevation $\theta$n for representative dielectric materials at a frequency of 60 GHz are given in Table 1 and Table 2.

Table 1

| dielectric material | relative permittivity ($\varepsilon_r$) |
|---|---|
| acrylic resin | $2.56\text{ -j }3.65 \times 10^{-2}$ |
| polycarbonate resin | $2.75\text{ -j }7.78 \times 10^{-2}$ |
| ABS (acrylonitrile-butadiene-styrene) resin | $2.65\text{ -j }2.60 \times 10^{-2}$ |
| Teflon resin | $1.97\text{-j }1.08 \times 10^{-2}$ |

Table 2

| dielectric material | thickness t(mm) | angle of elevation (°) | thickness t(mm) | angle of elevation (°) |
|---|---|---|---|---|
| acrylic resin | 3.1 | 35 | 4.6 | 35,58 |
| polycarbonate resin | 2.0 | 35 | 3.6 | 35 |
| ABS resin | 3.1 | 35 | 4.6 | 35,58 |
| Teflon resin | 3.5 | 35 | 4.5 | 35,58 |

Next, the setting of thickness t of radome 2 will be described. To set the thickness t it is necessary to find the transmittance T of the dielectric material. Transmittance T is obtained by means of the following formula.

$$T = \frac{1\text{-}R'^2\exp\{\text{-}j(\delta\text{-}k_0t)\}}{1\text{-}R'^2\exp(\text{-}j^2\delta)}$$

$$\delta = \frac{2\pi t}{\lambda}\sqrt{n^2 - \sin^2\theta}$$

where

R' is:     $R'_s$ for the s-polarization
        $R'_p$ for the p-polarization

$$R'_s = \frac{\sqrt{1\text{-}\sin^2\theta}\text{-}\sqrt{n^2\text{-}\sin^2\theta}}{\sqrt{1\text{-}\sin^2\theta}\text{+}\sqrt{n^2\text{-}\sin^2\theta}}$$

$$R'_p = \frac{n^2\sqrt{1\text{-}\sin^2\theta}\text{-}\sqrt{n^2\text{-}\sin^2\theta}}{n^2\sqrt{1\text{-}\sin^2\theta}+\sqrt{n^2\text{-}\sin^2\theta}}$$

$k_0$ :      coefficient

$n$ :      refractive index $n_r$-$jn_i$

$n_r$ :      real part of refractive index

$n_i$ :      imaginary part of refractive index.

FIG. 6 shows the relation between thickness t of dielectric material and transmittance T of an electromagnetic wave of frequency 60 GHz. This relation is shown for acrylic resin, polycarbonate resin, ABS resin and Teflon resin. These results show that transmittance does not decrease in direct proportion to an increase in thickness. For example, in the case of acrylic resin, although transmittance at a thickness of 2.3 mm is 87%, at a thickness of 3.1 mm the transmittance rises to 95%. It decreases to 85.5% at 3.9 mm but rises again to 93% at 4.6 mm.

This characteristic can be utilized both to satisfy the mechanical strength requirement and to select a thickness t at which a high transmittance T will be obtained. For example, when acrylic resin is used, setting thickness t to 4.6 mm enables a transmittance T of 93% to be obtained.

For a qualitative explanation of the characteristic exemplified in FIG. 6, please refer to the detailed explanation which was given above in "Disclosure of the Invention".

As has been explained above, the present invention enables conventional plastic processing technology to be used to manufacture a radome through which electromagnetic waves for radar with high frequencies of several tens of gigahertz can pass, and which amply protects an antenna element from wind and rain. The present invention also enables a practical device with a small size construction to be implemented inexpensively.

Second Embodiment

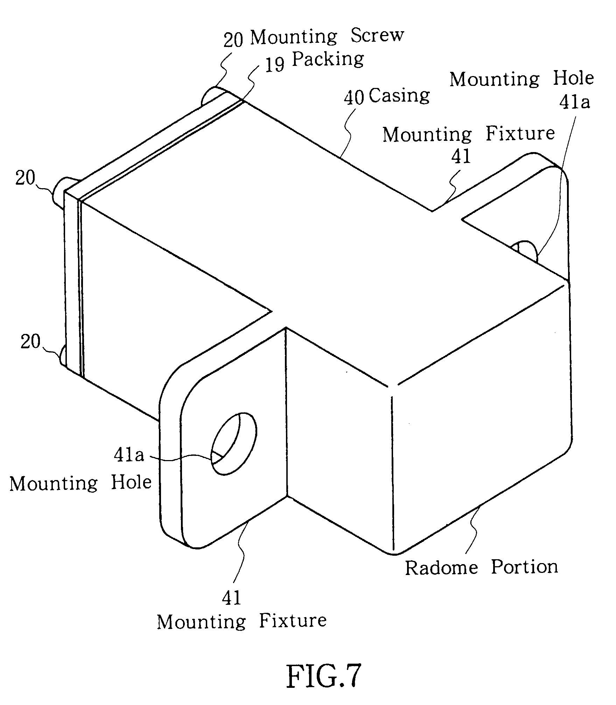

FIG. 7 is a perspective view showing the external appearance of a vehicle-mounted radar antenna according to a second embodiment of this invention.

A vehicle-mounted antenna element according to a second embodiment of the present invention comprises the antenna element and radar device proper pertaining to the first embodiment and illustrated in FIG. 1. The antenna element comprises transmitting antenna element 1a, receiving antenna element 1b, attenuator 4, mixer 5, oscillator 6 and amplifier 7. The radar device proper comprises A/D converter 14, current detection circuit 15, fast Fourier transform circuit 16, computer unit 17 and oscillator output control circuit 18. However, in this second embodiment, the antenna element and the radar device proper are both housed within casing 40 which has been molded as a single box structure. Fixtures 41 having mounting holes 41a are formed on casing 40, and rear cover 21 is fixed to the rear of casing 40 by way of packing 19 and by means of mounting screws 20.

The angle of incidence θ of the electromagnetic waves at the radome surface, and the thickness t of the radome portion, of a vehicle-mounted radar antenna according to this second embodiment of the invention thus constituted are set in the same manner as in the first embodiment.

This second embodiment gives the same effect as the first embodiment and has the advantage that because all components are housed in one casing, the number of parts is reduced.

**Claims**

1. A vehicle-mounted radar antenna fitted to a vehicle and comprising, facing the direction of vehicle travel, an antenna element for transmitting and/or receiving electromagnetic waves, and a radome formed from a dielectric material and covering this antenna element;

    wherein the angle of incidence (θ) of electromagnetic waves at the surface of the aforesaid radome is set to within ±5° of the Brewster angle.

2. A vehicle-mounted radar antenna according to claim 1, wherein the frequency of the electromagnetic waves is 50 to 100 GHz (wavelength of 6 mm to 3 mm).

3. A vehicle-mounted radar antenna fitted to a vehicle and comprising, facing the direction of vehicle travel, an antenna element for transmitting and/or receiving electromagnetic waves, and a radome formed from a dielectric material and covering this antenna element;

    wherein the thickness of the aforesaid radome where the electromagnetic waves pass through it is set to:

$$0.5 \times n\lambda g$$

where n is a natural number and $\lambda g$ is the guide wavelength of the electromagnetic waves in the aforesaid dielectric material.

4. A vehicle-mounted radar antenna according to claim 3, wherein the frequency of the electromagnetic waves is 50 to 100 GHz (wavelength of 6 mm to 3 mm).

5. A vehicle-mounted radar antenna fitted to a vehicle and comprising, facing the direction of vehicle travel, an antenna element for transmitting and/or receiving electromagnetic waves, and a radome formed from a dielectric material and covering this antenna element;
   wherein the aforesaid radome is a box structure formed from a dielectric material, and the whole of the aforesaid antenna element is mounted within this box structure, and a fixture is provided on this box structure for fitting it to a vehicle body.

6. A vehicle-mounted radar antenna according to claim 5, wherein the frequency of the electromagnetic waves is 50 to 100 GHz (wavelength of 6 mm to 3 mm).

7. A vehicle-mounted radar antenna according to claim 6, wherein in addition to the aforesaid entire antenna element, at least part of the transmitting circuit and/or the receiving circuit is mounted within the aforesaid box structure.

FIG.1

20 Mounting Screw

Packing
19

11 Radar Device Casing

Mounting Fixture 3

Mounting
Hole 3a

Rear Cover
21

13 Fixing Screw

12 Packing

20

20

20

3a
Mounting Hole

3
Mounting Fixture

2 Radome

FIG.2

10 Vehicle − mounted
Readar  Device

25
Bumper

FIG.3

Electromagnetic
Wave Absorber
31

36
Receiver

35 Receiving
Antenna

t

$\theta$ n

$\theta$ n

33
Transmitter

34
Transmitting
Antenna

32
Test piece

FIG.4

FIG.5

FIG.6

20 Mounting Screw

19 Packing

Mounting Hole
41a

40 Casing

Mounting Fixture
41

20

20

41a

Mounting Hole

Radome Portion

41
Mounting Fixture

FIG.7

**EP 0 859 425 A1**

### INTERNATIONAL SEARCH REPORT

| | International application No. |
|---|---|
| | PCT/JP97/01979 |

**A. CLASSIFICATION OF SUBJECT MATTER**

Int. Cl$^6$ H01Q1/42

According to International Patent Classification (IPC) or to both national classification and IPC

**B. FIELDS SEARCHED**

Minimum documentation searched (classification system followed by classification symbols)

Int. Cl$^6$ H01Q1/42

Documentation searched other than minimum documentation to the extent that such documents are included in the fields searched

| | | | |
|---|---|---|---|
| Jitsuyo Shinan Koho | 1926 - 1997 | Jitsuyo Shinan Toroku | |
| Kokai Jitsuyo Shinan Koho | 1971 - 1997 | Koho | 1996 - 1997 |
| Toroku Jitsuyo Shinan Koho | 1994 - 1997 | | |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| Y | JP, 8-179030, A (Hughes Aircraft Co.), July 12, 1996 (12. 07. 96), Page 2, right column, lines 18 to 30 & US, 5486832, A & EP, 690315, A | 1 - 7 |
| Y | JP, 7-104052, A (TRW Inc.), April 21, 1995 (21. 04. 95), Page 6, right column, lines 13 to 42 (Family: none) | 1 - 7 |
| X | JP, 7-283634, A (Murata Mfg. Co., Ltd.), October 27, 1995 (27. 10. 95), Page 2, right column, lines 15 to 39 & EP, 676648, A | 5 - 7 |
| Y | | 1 - 4 |
| Y | JP, 8-148922, A (Central Japan Railway Co., Kawasaki Steel Corp.), June 7, 1996 (07. 06. 96), Page 2, left column, lines 28 to 32; page 3, | 3 - 4 |

[X] Further documents are listed in the continuation of Box C.    [ ] See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier document but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| September 1, 1997 (01. 09. 97) | September 9, 1997 (09. 09. 97) |

| Name and mailing address of the ISA/ | Authorized officer |
|---|---|
| Japanese Patent Office | |
| Facsimile No. | Telephone No. |

Form PCT/ISA/210 (second sheet) (July 1992)

16

**INTERNATIONAL SEARCH REPORT**

| International application No. |
| --- |
| PCT/JP97/01979 |

C (Continuation). DOCUMENTS CONSIDERED TO BE RELEVANT

| Category* | Citation of document, with indication, where appropriate, of the relevant passages | Relevant to claim No. |
| --- | --- | --- |
| | right column, lines 13 to 15 (Family: none) | |
| Y | JP, 7-81490, A (Hino Motors, Ltd.),<br>March 28, 1995 (28. 03. 95),<br>Page 3, left column, line 27 to right column,<br>line 21 (Family: none) | 1 - 7 |
| Y | JP, 50-103234, A (Sumitomo Electric Industries,<br>Ltd.),<br>August 15, 1975 (15. 08. 75),<br>Page 2, upper left column, lines 5 to 15<br>(Family: none) | 1 - 2 |
| Y | JP, 49-46662, A (Sumitomo Electric Industries,<br>Ltd.),<br>May 4, 1974 (04. 05. 74),<br>Page 4, upper left column, line 6 to upper<br>right column, line 3 (Family: none) | 1 - 2 |

Form PCT/ISA/210 (continuation of second sheet) (July 1992)